# EUROPÄISCHE PATENTANMELDUNG

(11) **EP 3 823 143 A1**
(43) Veröffentlichungstag der Anmeldung: **19.05.2021**
(21) Anmeldenummer: 20206639.5
(22) Anmeldetag: 10.11.2020
(51) Int. Cl.: H02K 41/03

(54) **ANTRIEBSEINHEIT ZUR ERZEUGUNG EINER TRANSLATORISCHEN BEWEGUNG**

(30) Priorität: 13.11.2019 DE 102019217527
(71) Anmelder: Fertigungsgerätebau A. Steinbach GmbH & Co. KG, 97616 Salz bei Bad Neustadt (DE)
(72) Erfinder: Gabel, Klaus, 97616 Salz bei Bad Neustadt (DE); Wolf, Mario, 97616 Salz bei Bad Neustadt (DE); Maul, Patrick, 97616 Salz bei Bad Neustadt (DE); Steinbach, Thorsten, 97616 Salz bei Bad Neustadt (DE)
(74) Vertreter: Hoffmann Eitle

(57) **Zusammenfassung**

Die Erfindung betrifft eine Antriebseinheit zur Erzeugung einer translatorischen Bewegung, umfassend: ein Gehäuse, das ein Primärteil aufnimmt, ein Sekundärteil, wobei das Primärteil eine Vielzahl von in axialer Richtung geschichteten Blechen aufweist, die Zähne ausbilden, wobei jeweils eine Spule um einen Zahn gewickelt ist, und an einer zum Sekundärteil weisenden Seite des Primärteils Magnete an den Blechen angeordnet sind.

## Beschreibung

### Technisches Gebiet

Die Erfindung betrifft eine Antriebseinheit zur Erzeugung einer translatorischen Bewegung, die insbesondere zur Bereitstellung einer oszillierenden Bewegung eingesetzt werden kann.

### Stand der Technik

Gemäß dem Stand der Technik sind lineare Antriebe bekannt, bei denen Permanentmagnete an einem Läufer vorgesehen sind. Bei einem innenliegenden Läufer werden dabei Permanentmagnete verwendet, die ein Magnetfeld mit wechselnder Polarität ausbilden. Beispielsweise sind die Magnete dabei auf einer rohrförmig ausgebildeten Welle angebracht.

Allerdings werden in der praktischen Anwendung steigende Anforderungen an Antriebe gestellt, insbesondere wenn diese eine Vielzahl von wiederkehrenden Bewegungen hochdynamisch mit großen Kräften und kurzen Hüben durchführen sollen (reduzierte Massenträgheit) und ein möglichst geringer Wartungsaufwand gefordert wird.

### Gegenstand der Erfindung

Die Erfindung zielt darauf ab, eine Antriebseinheit bereitzustellen, die insbesondere eine oszillierende Bewegung mit hoher Hubanzahl bei großen Kräften und kurzen Hüben hochdynamisch über längere Zeiträume ausführen kann.

Der Gegenstand des Anspruchs 1 stellt eine entsprechende Antriebseinheit bereit. Weitere bevorzugte Ausführungsformen sind in den abhängigen Ansprüchen aufgeführt. Ferner betrifft die Erfindung die Verwendung einer Antriebseinheit.

Die erfindungsgemäße Antriebseinheit hat den Vorteil, dass diese insbesondere dort zum Einsatz kommen kann, wo wiederholende Fahrwege bei hoher Geschwindigkeit gefragt sind. Rein beispielhaft kann die Antriebseinheit für eine Prüfeinrichtung, beispielsweise als Ersatz für hydraulische Aktuatoren, oder für einen Generator zur Energieerzeugung eingesetzt werden, beispielsweise für ein Blockheizkraftwerk.

Die erfindungsgemäße Antriebseinheit hat sich besonders in einem Bereich als vorteilhaft erwiesen, in dem relativ kurze Hübe gefordert werden, die für eine Antriebseinheit auf Grund von Verschleiß relativ anspruchsvoll sind. Ein Wartungsintervall wird demnach deutlich verlängert. In diesem Zusammenhang schlägt die Erfindung, insbesondere zur Reduzierung der bewegten Masse, vor, Magnete nur im Primärteil, jedoch nicht im Sekundärteil, vorzusehen.

Wird die Antriebseinheit beispielsweise als Lineargenerator, bevorzugt Freikolben-Lineargenerator, in Blockheizkraftwerken oder einer mobilen Energiequelle, beispielsweise für ein Fahrzeug, eingesetzt, so kann aktiv auf den Energieerzeugungsprozess eingewirkt werden, indem bei der Verbrennung Einfluss auf den Hub genommen wird.

Erfindungsgemäß wird eine Antriebseinheit zur Erzeugung einer translatorischen Bewegung bereitgestellt, die aufweist: ein Gehäuse, das ein Primärteil aufnimmt, sowie ein Sekundärteil. Das Primärteil weist eine Vielzahl von in axialer Richtung geschichteten Blechen auf, die Zähne ausbilden, wobei jeweils eine Spule um einen Zahn gewickelt ist. An einer zum Sekundärteil weisenden Seite des Primärteils sind Magnete, insbesondere Permanentmagnete, an den Blechen angeordnet. Es ist bevorzugt, dass jeweils eine Spule derart um einen Zahn gewickelt ist, sodass sich die Spule zumindest abschnittsweise, bevorzugt überwiegend, in einer axialen Richtung der Antriebseinheit erstreckt.

Bevorzugt wird durch die Antriebseinheit ein Antrieb für eine translatorische Bewegung bereitgestellt.

Ferner ist bevorzugt, dass die Antriebseinheit als Transversalflussmaschine ausgebildet ist.

In einer Ausführungsform wird durch die Bleche ein Umfangsring ausgebildet, der ausgehend vom Umfangsring die Zähne ausbildet, die sich von einer Umfangsseite des Umfangsrings entlang der Achse der Antriebseinheit erstrecken. Der Umfangsring kann an einer Innenwand des Gehäuses anliegen.

Es ist bevorzugt, dass jeder der Zähne einen Anbringungsabschnitt zur Anbringung der Magnete in einer sich in axialer Richtung erstreckenden Reihe umfasst. Somit können die Magnete in Reihen an den Blechen angeordnet werden. Gemäß einer weiteren Ausführungsform ist es vorgesehen, dass der Anbringungsabschnitt eine Vertiefung ausbildet, in welche die Magnete eingebracht, vorzugsweise geklebt, sind. Auf diese Weise können die Magnete besonders sicher an den Blechen befestigt werden.

Zusätzlich können die Magnete mit einer Bandage am Anbringungsabschnitt gesichert werden. Somit können die Magnete insbesondere bei hohen dynamischen und/oder thermischen Veränderungen zusätzlich gesichert werden.

Eines der Bleche kann mit einem Innenumfangsvorsprung des Gehäuses in Kontakt stehen, um eine exakte Positionierung des Blechpakets im Gehäuse in axialer Richtung zu gewährleisten.

Die Magnete können in axialer Richtung der Antriebseinheit abwechselnd gepolt und in Umfangsrichtung benachbarte Magnete, bevorzugt um 1/n Phasen der Polpaarweite axial, versetzt zueinander angeordnet sein. Diese Ausgestaltung hat sich insbesondere für den Einsatz im Bereich sich wiederholender Fahrwege bei hoher Geschwindigkeit und hohen Kräften als vorteilhaft erwiesen.

In einer weiteren Ausführungsform ist es vorgesehen, dass das Sekundärteil ferromagnetische Flussleitelemente aufweist, die an einer Umfangsfläche der Welle des Sekundärteils vorgesehen und durch nicht-ferromagnetische Distanzstücke voneinander beabstandet sind. Die Abfolge von Flussleitelementen und Distanzstücken (Polpaarweite) ist auf die Anordnung der Magnete für einen sicheren und zuverlässigen Betrieb der Antriebseinheit abzustimmen.

Es ist in einer bestimmten Ausführungsform bevorzugt, dass eine axiale Länge eines Abschnitts des Sekundärteils, in der magnetische Flussleitelemente angeordnet sind, eine axiale Länge des Stators, insbesondere um mindestens 50%, bevorzugt mindestens 100%, übersteigt, um größere Hübe bereitstellen zu können.

In einer Ausführungsform ist es vorgesehen, dass das Sekundärteil mit Gleitlagern gelagert ist, um einen wartungsarmen Betrieb zu gewährleisten. Dabei ist es ferner bevorzugt, dass die Gleitlager jeweils in einem am Gehäuse befestigten Lagerflansch aufgenommen sind, um die Montage der Gleitlager an der Antriebseinheit zu vereinfachen.

Gemäß einer weiteren Ausführungsform ist das Sekundärteil mit hydrostatischen Lagern gelagert, um höhere Querkräfte aufnehmen zu können.

In einer anderen Ausführungsform ist das Sekundärteil mit einer Magnetlagerung oder Luftlagerung gelagert, um einen wartungsfreien Betrieb zu gewährleisten.

In einer anderen Ausführungsform umfasst die Antriebseinheit keine Gleitlager, sondern die Lagerung des Sekundärteils wird durch gezielte Ansteuerung/Regelung der Spulen des Primärteils mittels Anzugs- und/oder Abstoßkräften, die radial wirken, gewährleistet. Diese Ansteuerung/Regelung kann auch in Kombination mit den zuvor beschriebenen Gleitlagern zum Einsatz kommen, um die Gleitlager zu entlasten.

Somit kann mit der Antriebseinheit zusätzlich zu einer translatorischen Bewegung des Sekundärteils eine Kraftkomponente erzeugt werden, die quer, insbesondere senkrecht, zur translatorischen Bewegung wirkt.

Die gezielte Ansteuerung/Regelung der Spulen des Primärteils zur Erzeugung von Anzugs- und/oder Abstoßkräften quer, insbesondere senkrecht, zur Bewegungsrichtung des Sekundärteils hat sich insbesondere bei kurzen, sich wiederholenden Hüben als besonders vorteilhaft erwiesen, da geringe Verfahrwege des Sekundärteils im oszillierenden Betrieb einen lokalen Verschleiß der Lagerungen bedingen.

In einer weiteren Ausführungsform ist es vorgesehen, dass die Antriebseinheit ein lineares Messsystem zur Erfassung einer axialen Position des Sekundärteils umfasst. Die vom Messsystem ermittelten Positionsdaten können zur Ansteuerung/Regelung der axialen Bewegung des Sekundärteils verwendet werden. Gemäß einer Modifikation kann eine solche Erfassung auch geberlos erfolgen.

In diesem Zusammenhang kann die Antriebseinheit eine Steuer- und/oder Regeleinrichtung umfassen, die eingerichtet ist, die vom Messsystem erfassten Daten zur Steuerung/Regelung der Bewegung des Sekundärteils zu verwenden. Die Steuer- und/oder Regeleinrichtung kann auch in die Antriebseinheit integriert sein.

Es ist ferner bevorzugt, dass ein Luftspalt zwischen Sekundärteil und einer Innenumfangsseite des Stators vorgesehen ist, um eine möglichst positive Energie-Leistungsbilanz der Antriebseinheit zu erreichen. Es ist bevorzugt, dass der Luftspalt 3mm oder weniger, vorzugsweise 1,5mm oder weniger, besonders bevorzugt 0.5mm oder weniger beträgt.

Gemäß einer weiteren Ausführungsform ist eine Innenwand des Gehäuses zylinderförmig ausgebildet, wobei das Primärteil an einer Innenwand des Gehäuses angeordnet ist.

Das Gehäuse kann ferner an seiner Außenseite mit Kühlrippen versehen sein, um die Kühlung (beziehungsweise Wärmeabfuhr) der Antriebseinheit zu verbessern. Eine Verbesserung der Kühlleistung kann alternativ oder zusätzlich durch eine Flüssigkeitskühlung, vorzugsweise im Aktivteil, erzielt werden.

Gemäß einer weiteren Ausführungsform kann die Antriebseinheit einen Drehbewegungsabschnitt aufweisen, um das Bewegungselement in eine zusätzliche, insbesondere oszillierende, Drehbewegung zu versetzen. Somit kann das Einsatzspektrum der Antriebseinheit nochmals erweitert werden. Wird eine solche Antriebseinheit für eine Prüfeinrichtung verwendet, kann eine kombinierte translatorische und rotatorische Bewegung erzeugt werden. Dabei werden Spiel- und Massenträgheitseinflüsse sowie Verschleiß verringert und hohe Regelgüten erzielt.

Die Erfindung betrifft ferner die Verwendung der Antriebseinheit gemäß einer der zuvor genannten Aspekte zur Erzeugung einer oszillierenden, translatorischen Bewegung.

Insbesondere kann die Antriebseinheit als Prüfaktuator oder als Lineargenerator, bevorzugt Freikolben-Lineargenerator, eingesetzt werden. Ein Lineargenerator könnte beispielsweise für ein Blockheizkraftwerk Anwendung finden. Wird die Antriebseinheit als Freikolben-Lineargenerator eingesetzt, so kann auf diese Weise aktiv in den Energieerzeugungsprozess, insbesondere Verbrennungsprozess, eingewirkt werden. Auch kann die Antriebseinheit, bevorzugt als Freikolben-Lineargenerator, in einer mobilen Energiequelle zur Energieerzeugung (beispielsweise in einem Fahrzeug) zum Einsatz kommen.

Ferner ist es bevorzugt, dass das Primärteil als Stator und das Sekundärteil als (beweglicher) Läufer ausgebildet ist. Gemäß Modifikationen kann jedoch auch das Primärteil beweglich und das Sekundärteil stationär angeordnet sein. Die Modifikation hat sich insbesondere bei der Verwendung im Bereich von Handhabungsaufgaben als vorteilhaft erwiesen.

Es ist bevorzugt, dass das Sekundärteil innerhalb des Primärteils angeordnet ist. In einer Modifikation kann jedoch das Primärteil auch innerhalb des Sekundärteils angeordnet sein.

### Kurze Beschreibung der Zeichnungen

- Fig. 1: zeigt eine Antriebseinheit gemäß einer ersten Ausführungsform der Erfindung in einer Schnittansicht.
- Fig. 2: zeigt eine perspektivische Schnittansicht der in Fig. 1 dargestellten Antriebseinheit.
- Fig. 3: zeigt eine Ansicht der Blechpakete der in Fig. 1 dargestellten Ausführungsform.
- Fig. 4: ist eine Detailansicht von Fig. 3.
- Fig. 5: zeigt eine Antriebseinheit gemäß einer zweiten Ausführungsform der Erfindung in einer Schnittansicht.

### Detaillierte Beschreibung der bevorzugten Ausführungsform

Nachfolgend werden anhand der beigefügten Figuren Ausführungsformen der Erfindung im Detail beschrieben. In diesem Zusammenhang genannte Modifikationen können jeweils einzeln miteinander kombiniert werden, um weitere Ausführungsformen der Erfindung auszubilden. Obwohl die Beschreibung der bevorzugten Ausführungsform beispielhaft, und nicht einschränkend, zu verstehen ist, können Einzelmerkmale der Ausführungsform auch zur Spezifizierung der Erfindung herangezogen werden.

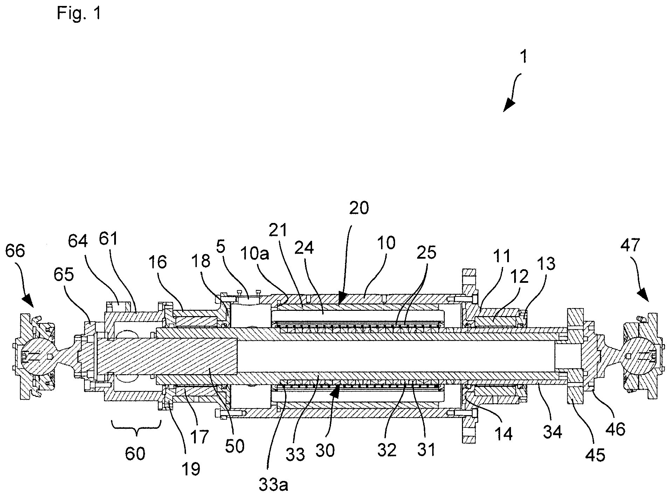

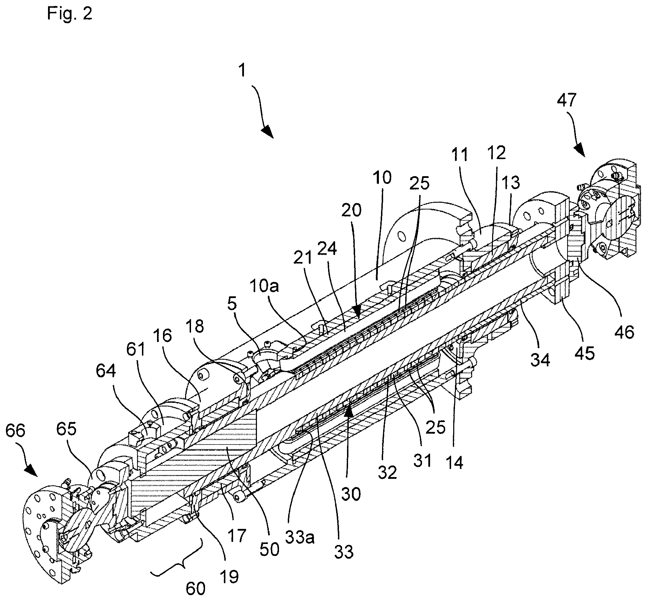

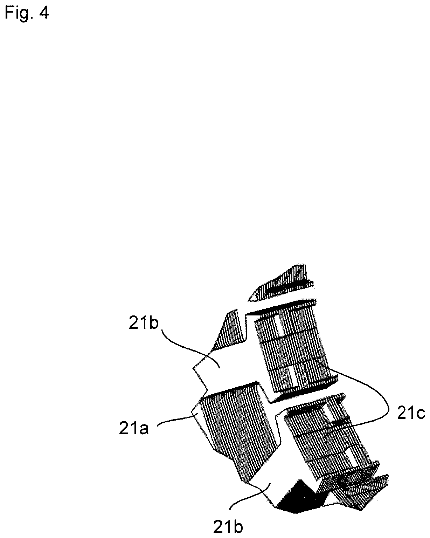

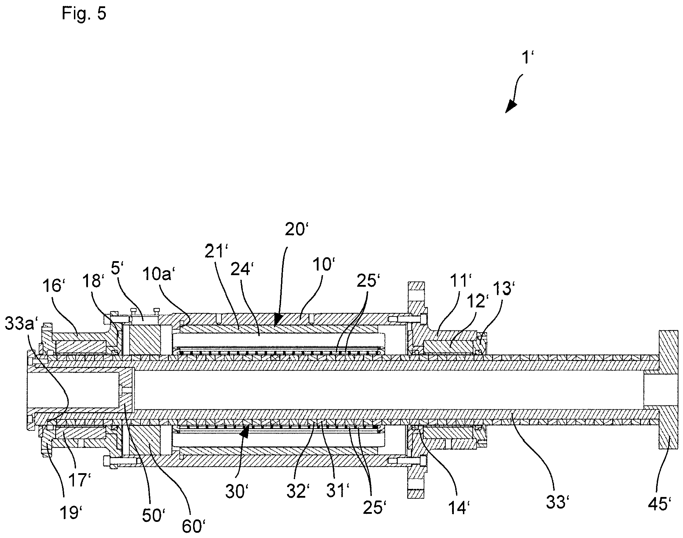

In den Figuren 1-4 werden Ansichten zur ersten Ausführungsform einer 3-phasigen Antriebseinheit 1 dargestellt. Figur 5 zeigt eine zweite Ausführungsform einer 3-phasigen Antriebseinheit 1'.

Die Antriebseinheit 1 gemäß der ersten Ausführungsform oder die Antriebseinheit 1' gemäß der zweiten Ausführungsform wird beispielsweise in einem Prüfstand eingesetzt, um eine oszillierende, translatorische Bewegung zu generieren. Der Antrieb kann als Transversalflussmaschine ausgeführt sein. Eine translatorische Bewegung der Antriebseinheit 1, 1' kann gegebenenfalls zusätzlich um eine rotatorische Bewegung um eine Achse der Antriebseinheit 1 ergänzt werden, wie dies in der deutschen Patentanmeldung 10 2015 203 065 A1 beschrieben ist.

Die Antriebseinheit 1 umfasst ein Gehäuse 10, das eine Umfangswand mit an den axialen Enden offenen Bereichen aufweist. Am Gehäuse 10 ist eine Öffnung 5 für einen Stecker zur Energie- und/oder Datenversorgung der Antriebseinheit 1 vorgesehen.

An einem ersten axialen Ende des Gehäuses 10 ist ein erster Lagerflansch 11 angebracht, der ein Gleitlager 12 aufnimmt. Das Gleitlager 12 ist durch einen Deckel 13 sowie einen ersten Abstreifer 14 am ersten Lagerflansch 11 fixiert. Der Deckel 13 und der Abstreifer 14 weisen jeweils eine Dichtung auf.

An einem zweiten axialen Ende des Gehäuses 10 ist ein zweiter Lagerflansch 16 angebracht, der ein zweites Gleitlager 17 aufnimmt. Das zweite Gleitlager 17 wird an der zum Gehäuse 10 weisenden Seite mit einem zweiten Abstreifer 18 sowie an der vom Gehäuse 10 wegweisenden Seite des zweiten Lagerflansches 16 mit einem zweiten Deckel 19 am zweiten Lagerflansch 16 fixiert. Der zweite Deckel 19 und der zweite Abstreifer 18 weisen jeweils eine Dichtung auf.

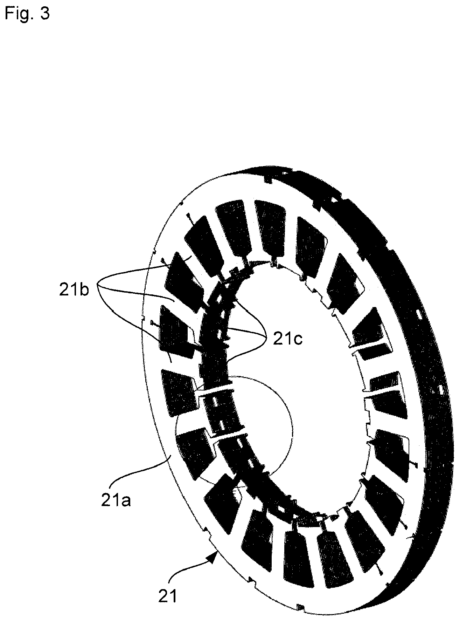

Im Gehäuse 10 ist ein Primärteil 20 (hier: Stator) aufgenommen, der sich entlang einer Innenumfangsseite des Gehäuses 10 erstreckt. Der Stator 20 umfasst eine Vielzahl von geschichteten Blechen 21 (siehe hierzu auch Detailansichten gemäß Figuren 3-4). An einer in axialer Richtung abschließenden Seite der Bleche 21 kann ein erster Statorring und an der anderen in axialer Richtung abschließenden Seite der Bleche 21 kann ein zweiter Statorring aus nicht-ferromagnetischem Material vorgesehen sein. In den Figuren sind derartige Statorringe in dieser Ausführungsform nicht dargestellt.

Die aneinandergefügten Bleche 21 bilden einen Umfangsring 21a aus, der eine Vielzahl von Statorzähnen 21b aufweist, die sich von einer inneren Umfangsseite des Umfangsrings 21a zur Achse der Antriebseinheit 1 erstrecken. Jeder der Statorzähne 21b weist einen Anbringungsabschnitt 21c auf. Die Anbringungsabschnitte 21c bilden einen Bereich zur Anbringung von Permanentmagneten 25 aus (in Figuren 3-4 sind die Magnete nicht dargestellt). Die Permanentmagnete 25, die in einer jeweiligen Reihe in axialer Richtung eine abwechselnde Polung aufweisen, sind an den Anbringungsabschnitten befestigt, vorzugsweise angeklebt.

Um die durch die aneinandergefügten Bleche 21 ausgebildeten Statorzähne 21b ist jeweils eine Spule 24 derart gewickelt, dass sich die Spule 24 abschnittsweise in axialer Richtung der Antriebseinheit 1 erstreckt.

In Umfangsrichtung sind die Magnete 25 jeweils bevorzugt um 1/n-Phasen der Polpaarweite (hier: 120°) axial versetzt zueinander angeordnet, sodass Magnete 25 von sich in axialer Richtung erstreckenden, benachbarten Reihen sich in Umfangsrichtung teilweise überlappen.

Der Stator 20 kann beispielsweise über ein an einer Innenumfangsseite des Gehäuses 10 eingeschobenes Distanzstück (in den Figuren nicht dargestellt) mittels des ersten Lagerflansches 11 gegen einen Innenumfangsvorsprung 10a des Gehäuses 10 verspannt werden, um die Lage des Stators 20 in axialer Richtung zu definieren. Hierbei kommt der Umfangsring 21a des Stators 20 mit dem Innenumfangsvorsprung 10a in Kontakt.

Im Gehäuse 10 wird ein Sekundärteil 30 (hier: Läufer) axial beweglich geführt, wobei an der dem Stator 20 gegenüberliegenden Außenumfangsseite des Sekundärteils 30 eine Welle 33 als Hohlzylinder ausgebildet ist.

Der Läufer 30 umfasst ferromagnetische Flussleitelemente 31, die auf der Welle 33 angebracht und durch nicht-ferromagnetische Distanzstücke 32 in axialer Richtung voneinander beabstandet sind. An einem sich durch den ersten Lagerflansch 11 zu einer äußeren Seite erstreckenden Bereich der Welle 33 ist ein vorzugsweise als Hohlzylinder ausgebildetes Abschlussstück 34 vorgesehen, um die ferromagnetischen Flussleitelemente 31 des Läufers 30 gegen einen Umfangsvorsprung 33a der Welle 33 zu halten.

Zur Fixierung der Welle 33 des Läufers 30 wird ein Befestigungsflansch 45 verwendet, der an der Welle 33 angebracht ist und durch einen Kontakt mit dem Abschlussstück 34 den Läufer 30 gegen den Umfangsvorsprung 33a der Welle 33 verspannt. Der Befestigungsflansch 45 dient darüber hinaus zur Aufnahme einer Befestigungsplatte 46, an der vorzugsweise ein erstes Kugelgelenk 47 angebracht ist.

An der zum zweiten Lagerflansch 16 weisenden Seite der Welle 33 ist ein Trägerelement 50 an der Welle 33 angebracht, das sich abschnittsweise innerhalb der Welle 33 erstreckt. Das Trägerelement 50 nimmt eine Maßverkörperung zur Positionsbestimmung, vorzugsweise ein Wegmesssystem, auf.

Die vom Messsystem 60 ermittelten Positionsdaten können zur Ansteuerung und/oder Regelung der axialen Bewegung des Läufers 30 verwendet werden.

Ferner weist das Messsystem 60 einen Anschluss 64 zur Energie- und/oder Datenübertragung auf.

An einer vom zweiten Lagerflansch 16 wegweisenden Seite des Gehäuses 61 ist eine zweite Befestigungsplatte 65 vorgesehen, an der beispielsweise ein zweites Kugelgelenk 66 angebracht ist, um eine flexible Krafteinleitung zu realisieren. Das zweite Kugelgelenk 66 kann mit einem festen Untergrund oder einem stationären Element einer Prüfeinrichtung in Kontakt stehen, wohingegen das erste Kugelgelenk 47 an einem Prüfkörper angebracht ist.

Ferner ist es möglich, dass das erste Kugelgelenk 47 mit einem festen Untergrund oder einem stationären Element einer Prüfeinrichtung in Kontakt steht, wohingegen das zweite Kugelgelenk 66 an einem Prüfkörper angebracht ist.

Gemäß einer weiteren Modifikation können sowohl das erste Kugelgelenk 47 als auch das zweite Kugelgelenk 66 jeweils an einem Prüfkörper angebracht sein, so dass ein paralleler Prüfvorgang zweier Prüfkörper erfolgen kann.

Die Antriebseinheit 1' der zweiten Ausführungsform ist im Wesentlichen ähnlich ausgebildet wie die erste Ausführungsform, so dass für gleiche oder ähnliche Bauteile entsprechende Bezugszeichen verwendet werden. Die Antriebseinheit 1' der zweiten Ausführungsform unterscheidet sich von der Antriebseinheit 1 der ersten Ausführungsform darin, dass der Läufer 30' in axialer Richtung länger ausgebildet ist, und dabei anstelle eines Anschlussstücks 34 weitere ferromagnetische Flussleitelemente 31' sowie nicht-ferromagnetische Distanzstücke 32' entlang der Welle 33' vorgesehen sind. Auf diese Weise kann ein im Vergleich zur ersten Ausführungsform größerer Hub ermöglicht werden.

Die ferromagnetischen Flussleitelemente 31' sowie die nichtferromagnetischen Distanzstücke 32' sind gegen einen Umfangsvorsprung 33a' der Welle 33' geschoben, um die Flussleitelemente 31' und die Distanzstücke 32' auf der Welle 33' zu halten.

Die Antriebseinheit 1' der zweiten Ausführungsform umfasst ein Gehäuse 10', wobei an einem ersten axialen Ende des Gehäuses 10' ein erster Lagerflansch 11' angebracht ist, der ein Gleitlager 12' aufnimmt. Am Gehäuse 10' ist eine Öffnung 5' für einen Stecker zur Energie- und/oder Datenversorgung der Antriebseinheit 1' vorgesehen. Das Gleitlager 12' ist durch einen Deckel 13' sowie einen ersten Abstreifer 14' am ersten Lagerflansch 11' fixiert. Der Deckel 13' und der erste Abstreifer 14' weisen jeweils eine Dichtung auf.

An einem zweiten axialen Ende des Gehäuses 10' ist ein zweiter Lagerflansch 16' angebracht, der ein zweites Gleitlager 17' aufnimmt. Das zweite Gleitlager 17' wird an der zum Gehäuse 10' weisenden Seite mit einem zweiten Abstreifer 18' sowie an der vom Gehäuse 10' wegweisenden Seite des zweiten Lagerflansches 16' mit einem zweiten Deckel 19' am zweiten Lagerflansch 16' fixiert. Der zweite Deckel 19' und der zweite Abstreifer 18' weisen jeweils eine Dichtung auf.

Im Gehäuse 10' ist ein Stator 20' aufgenommen, der sich entlang einer Innenumfangsseite des Gehäuses 10' erstreckt. Der Stator 20' umfasst eine Vielzahl von geschichteten Blechen 21', die ähnlich wie diejenigen der ersten Ausführungsform ausgebildet sind (siehe hierzu auch Detailansichten gemäß Figuren 3-4 der ersten Ausführungsform).

Der Stator 20' kann gegen einen Innenumfangsvorsprung 10a' des Gehäuses 10' geschoben oder verspannt werden, um die Lage des Stators 20' in axialer Richtung zu definieren.

An einer in axialer Richtung abschließenden Seite der Bleche 21' kann gemäß einer Modifikation ein erster Statorring und an der anderen in axialer Richtung abschließenden Seite der Bleche 21' kann ein zweiter Statorring aus nicht-ferromagnetischem Material vorgesehen sein. In der in Figur 5 dargestellten Ausführungsform sind derartige Statorringe nicht dargestellt.

Um die durch die aneinandergefügten Bleche 21' ausgebildeten Statorzähne (siehe hierzu auch Figuren 3-4 der ersten Ausführungsform) ist jeweils eine Spule 24' derart gewickelt, dass sich die Spule 24' abschnittsweise in axialer Richtung der Antriebseinheit 1' erstreckt. Ähnlich wie in der ersten Ausführungsform sind an den Anbringungsabschnitten der Bleche 21' Permanentmagnete 25' angebracht.

Der Läufer 30' umfasst die bereits genannten ferromagnetischen Flussleitelemente 31', die auf der Welle 33' angebracht und durch nicht-ferromagnetische Distanzstücke 32' in axialer Richtung voneinander beabstandet sind.

Die Antriebseinheit 1' umfasst ein nach dem Prinzip eines Resolvers ausgebildetes Messsystem 60', das im Gehäuse 10' zwischen dem Stator 20' und dem zweiten Lagerflansch 16' angeordnet ist. Insbesondere wird mit dem Messsystem 60' ein Wechsel ferromagnetischer und nicht-ferromagnetischer Bauteile auf der Welle 33' (der Flussleitelemente 31' und der Distanzstücke 32 erfasst, wobei eine zusätzliche Genauigkeit der Messung mittels Interpolation erreicht werden kann.

Mit dem Messsystem 60' können Positionsdaten der Welle 33' ermittelt werden, die wiederum zur Ansteuerung und/oder Regelung der axialen Bewegung des Sekundärteils 30' eingesetzt werden können.

Auch kann an einem an der Welle 33' angebrachten Befestigungsflansch 45' ein Gelenk, wie das erste Kugelgelenk 47 der ersten Ausführungsform, und an einer Befestigungsplatte, wie der Befestigungsplatte 65 der ersten Ausführungsform, ein Gelenk, wie das Kugelgelenk 66 der ersten Ausführungsform, angebracht sein. Hinsichtlich der Anbringung eines oder mehrerer Prüfkörper wird auf die Ausführungen zur ersten Ausführungsform verwiesen.

An der zum zweiten Lagerflansch 16' weisenden Seite der Welle 33' ist ein Trägerelement 50' an der Welle 33' angebracht, das sich abschnittsweise innerhalb der Welle 33' erstreckt. An das Trägerelement 50' kann beispielsweise ein Gelenk, wie ein Kugelgelenk, angebracht sein.

Obwohl in den Ausführungsformen eine Anbringung eines Gelenks oder Kugelgelenks beschrieben ist, kann ein solches Gelenk auch weggelassen werden, beispielsweise wenn die Welle direkt mit einem Gegenstand, wie einem Prüfkörper, verbunden ist.

Die jeweilige Antriebseinheit 1, 1' initiiert eine translatorische Bewegung. Zusätzlich kann die Antriebseinheit mit einer Einheit für eine (bevorzugt oszillierende) rotatorische Bewegung kombiniert sein, beispielsweise mit einem Drehbewegungsabschnitt, wie dieser in der DE 10 2015 203 065 A1 beschrieben ist.

Obwohl in den Ausführungsbeispielen jeweils eine Antriebseinheit 1, 1' dargestellt ist, die in einer Prüfeinrichtung verwendet wird, kann die Antriebseinheit beispielsweise gemäß einer weiteren Modifikation auch als Generator zur Energieerzeugung verwendet werden, beispielsweise in einem Blockheizkraftwerk. Auch kann die Antriebseinheit 1, 1' in einer mobilen Energiequelle zur Energieerzeugung (beispielsweise in einem Fahrzeug) zum Einsatz kommen.

In den zuvor beschriebenen Ausführungsformen ist das Primärteil als Stator und das Sekundärteil als (beweglicher) Läufer ausgebildet. Gemäß Modifikationen der zuvor beschriebenen Ausführungsformen kann jedoch auch das Primärteil beweglich und das Sekundärteil stationär angeordnet sein.

In den Ausführungsformen wird beschrieben, dass der Läufer innerhalb des Stators angeordnet ist. In einer Modifikation der Ausführungsform kann der Stator auch innerhalb des Läufers angeordnet sein.

## Patentansprüche

1. Antriebseinheit (1, 1') zur Erzeugung einer translatorischen Bewegung, umfassend:
ein Gehäuse (10, 10'), das ein Primärteil (20, 20') aufnimmt,
ein Sekundärteil (30, 30'),
wobei das Primärteil (20, 20') eine Vielzahl von in axialer Richtung geschichteten Blechen (21, 21') aufweist, die Zähne (21b) ausbilden,
wobei jeweils eine Spule (24, 24') um einen Zahn (21b) gewickelt ist, und
an einer zum Sekundärteil (30, 30') weisenden Seite des Primärteils (20, 20') Magnete (25, 25') an den Blechen (21, 21') angeordnet sind.

2. Antriebseinheit (1, 1') gemäß Anspruch 1, **dadurch gekennzeichnet, dass** durch die Bleche (21, 21') ein Umfangsring (21a) ausgebildet wird, der ausgehend vom Umfangsring (21a) die Zähne (21b) ausbildet, die sich von einer Umfangsseite des Umfangsrings (21a) entlang der Achse der Antriebseinheit (1, 1') erstrecken.

3. Antriebseinheit (1, 1') gemäß Anspruch 2, **dadurch gekennzeichnet, dass** jeder der Zähne (21b) einen Anbringungsabschnitt (21c) zur Anbringung der Magnete (25, 25') in einer sich in axialer Richtung erstreckenden Reihe umfasst, wobei bevorzugt ist, dass der Anbringungsabschnitt (21c) eine Vertiefung ausbildet, in welche die Magnete (25, (25') eingebracht, vorzugsweise eingeklebt, sind.

4. Antriebseinheit (1, 1') gemäß einem der vorangegangenen Ansprüche, **dadurch gekennzeichnet, dass** eines der Bleche (21, 21') mit einem Innenumfangsvorsprung (10a, 10a') des Gehäuses (10) in Kontakt steht.

5. Antriebseinheit (1, 1') gemäß einem der vorangegangenen Ansprüche, **dadurch gekennzeichnet, dass** die Magnete in axialer Richtung der Antriebseinheit (1, 1') abwechselnd gepolt und in Umfangsrichtung benachbarte Magnete (25, 25'), bevorzugt um 1/n Phasen der Polpaarweite axial, versetzt zueinander angeordnet sind.

6. Antriebseinheit (1, 1') gemäß einem der vorangegangenen Ansprüche, **dadurch gekennzeichnet, dass** das Sekundärteil (30, 30') ferromagnetische Flussleitelemente (31, 31') aufweist, die an einer Umfangsfläche der Welle (33, 33') des Sekundärteils vorgesehen und durch nicht-ferromagnetische Distanzstücke (32, 32') voneinander beabstandet sind.

7. Antriebseinheit (1') gemäß Anspruch 6, **dadurch gekennzeichnet, dass** eine axiale Länge eines Abschnitts des Sekundärteils (30'), in der magnetische Flussleitelemente (31') angeordnet sind, eine axiale Länge des Primärteils (20') insbesondere um mindestens 50%, bevorzugt mindestens 100%, übersteigt.

8. Antriebseinheit gemäß einem der vorangegangenen Ansprüche, **dadurch gekennzeichnet, dass** das Sekundärteil (30, 30') als beweglicher Läufer und das Primärteil (20, 20') als Stator ausgebildet ist, wobei bevorzugt ist, dass das Sekundärteil (30, 30') innerhalb des Primärteils (20, 20') angeordnet ist.

9. Antriebseinheit (1, 1') gemäß einem der vorangegangenen Ansprüche, **dadurch gekennzeichnet, dass** das Sekundärteil (30, 30') mit Gleitlagern (12, 12'; 17, 17'), hydrostatischen Lagern oder Magnetlagern gelagert ist, wobei bevorzugt ist, dass die Lager (12, 12'; 17, 17') jeweils in einem am Gehäuse (10, 10') befestigten Lagerflansch (11, 11'; 16, 16') aufgenommen sind.

10. Antriebseinheit (1, 1') gemäß einem der vorangegangenen Ansprüche, **dadurch gekennzeichnet, dass** die Antriebseinheit (1, 1') ein lineares Messsystem (60, 60') zur Erfassung einer axialen Position des Sekundärteils (30, 30') umfasst.

11. Antriebseinheit (1, 1') gemäß Anspruch 9, umfassend eine Steuer- und/oder Regeleinrichtung, die eingerichtet ist, die vom Messsystem (60, 60') erfassten Daten zur Steuerung und/oder Regelung der Bewegung des Sekundärteils (30) zu verwenden.

12. Antriebseinheit (1, 1') gemäß einem der vorangegangenen Ansprüche, **dadurch gekennzeichnet, dass** ein Luftspalt zwischen dem Sekundärteil (30, 30') und einer Innenumfangsseite des Primärteils (20, 20') beabstandet angeordnet ist, wobei bevorzugt ist, dass eine Spaltbreite 3mm oder weniger, vorzugsweise 1,5mm oder weniger, besonders bevorzugt 0.5mm oder weniger beträgt.

13. Antriebseinheit (1, 1') gemäß einem der vorangegangenen Ansprüche, **dadurch gekennzeichnet, dass** eine Innenwand des Gehäuses (10, 10') vorzugsweise zylinderförmig ausgebildet ist, wobei das Primärteil (20, 20') an einer Innenwand des Gehäuses (10, 10') angeordnet ist.

14. Antriebseinheit gemäß einem der vorangegangenen Ansprüche, **dadurch gekennzeichnet, dass** die Antriebseinheit einen Drehbewegungsabschnitt aufweist, um das Sekundärteil in eine, insbesondere oszillierende, Drehbewegung zu versetzen.

15. Verwendung der Antriebseinheit (1, 1') gemäß einem der vorangegangenen Ansprüche zur Erzeugung einer oszillierenden, translatorischen Bewegung, wobei bevorzugt ist, dass
die Antriebseinheit (1, 1') als Prüfaktuator oder Lineargenerator, weiter bevorzugt Freikolben-Lineargenerator, insbesondere für ein Blockheizkraftwerk oder für eine mobile Energiequelle zur Energieerzeugung verwendet wird.
